# EUROPEAN PATENT APPLICATION

(11) **EP 2 525 338 A1**
(43) Date of publication of application: **21.11.2012**
(21) Application number: 10842329.4
(22) Date of filing: 28.10.2010
(51) Int. Cl.: G09B 23/06, A63F 9/02

(54) **EDUCATIONAL AND RECREATIONAL DEVICE**

(30) Priority: 11.01.2010 RU 2010100415
(71) Applicant: Gosudarstvennoe Obrazovatelnoe Uchrezhdenie Vysshego Professionalnogo Obrazovaniya "Nizhegorodsky Gosudarstvennyi Universitet, Nizhegorodskaya oblast 603950 (RU)
(72) Inventor: ERSHOV, Sergei Nikolaevich, Nizhny Novgood 603163 (RU); MALYSHEV, Aleksandr Igorevich, Nizhny Novgood 603000 (RU)
(74) Representative: Jeck, Anton
(86) International application number: PCT/RU2010/000626
(87) International publication number: WO 2011/084083

(57) **Abstract**

The present invention relates to apparatuses that can be used as visual aids for teaching about body motions subjected to external forces and as games. The technical result obtained when using the claimed invention is an apparatus that has broad potential as a visual aid in learning about the motion of bodies subjected to external forces. The proposed apparatus is structurally simple and cheap, it can be used in the home environment as a game with educational, informative and entertaining properties. The apparatus comprises a ball and a panel that is made in the form of a periodic corrugation. The amplitude of the corrugation is at least 10 times smaller than the period of corrugation, and the ball has a diameter, which is at least 10 times smaller than the period of corrugation. Corrugations of the panel can be made sinusoidal, trapezoidal, triangular, or have other more complex forms. The apparatus can be provided with a device for throwing the ball at different angles to the plane of the panel and at different initial velocities. 7 claims, 2 figures, 1 table.

## Description

The present invention relates to apparatuses that can be used as visual aids and as games.

There are many apparatuses that combine cognitive, educational, and recreational properties. Currently, such apparatuses used for learning the laws of physics and mathematics in schools and universities, as well as in the home environment are in great demand.

Design features of apparatuses depend on their purpose. Thus, to convert the gravitational energy of body weight to mechanical energy of its translational motion, a two-cone body is used along with two inclined diverging planes designed to interact with the two-cone body, the apparatus having a multiple-link construction such that the gravitational energy of the body is converted into mechanical energy of its translational motion (RU 2238593 C2, 2003.07.10). To demonstrate the action of the two-coordinate law of probability distribution, the apparatus comprises a target in a vessel with liquid, this target being made in the shape of an open vessel of smaller dimensions having radially arranged partitions (RU 2108835 C1, 1998.04.20).

The present invention is aimed at creating a apparatus that can demonstrate the dynamics of motion of a material point or an elastic body (e.g., a ball) subjected to external forces.

The apparatus of US 4358276 A, 1982.11.09, like the claimed one, demonstrates the motion of bodies subjected to external forces and comprises the means to demonstrate body motions under acceleration, collision, and vibration. The apparatus includes a solid metal panel as a demonstration canvas. The panel is covered with material that reflects the trajectory of the ball whose motion direction is caused by an external force. Carbon paper that deforms when subjected to a rolling ball is used as such material. The panel is fixed on a table equipped with a mechanism imparting vibration to the panel, which causes an undulating or dotted trace of the rolling ball to appear on the deformable material, with a period exceeding its length. When the table vibrates in the horizontal plane, the ball trace is undulating, and when the table vibrates in the direction perpendicular to the plane of the table, the ball bounces, and its trace is in the form of dotted lines. The shape of the ball trace depends on the speed of the ball determined by the frequency of the table's vibration, which is demonstrated by the proposed apparatus.

The drawback of this apparatus as a visual aid is that it can only show the trajectory of the ball, depending on the direction of the applied force. At the same time, we know that in the learning process it is important to use means that have a learning feature determined by the learner's intellectual abilities. The apparatus is cumbersome due to the use of mechanisms to impart vibration to the panel, and the need for constant replacement of the carbon paper limits its scope of application preventing the apparatus from being included in the arsenal of tools used in everyday life.

The technical result obtained when using the claimed invention is an apparatus that has broad potential as a visual aid in learning about the motion of bodies subjected to external forces.

The proposed apparatus is structurally simple and cheap; it can be used in the home environment as a game with educational, informative and entertaining qualities.

The technical result is achieved in the apparatus comprising a ball and a panel, which is a periodic corrugation with an amplitude of at least 10 times smaller than the corrugation period, and the ball that has a diameter at least 10 times smaller than the period of corrugation.

Corrugation of the surface can be made sinusoidal, trapezoidal, triangular, or have some other more complex shape.

The apparatus can be provided with a device for throwing a ball at different angles to the plane of the panel.

The apparatus can be provided with a device for throwing a ball with different initial velocities.

The apparatus can be provided with a device for throwing a ball at different angles to the plane of the panel and with different initial velocities.

The panel can have an additional corrugation oriented at an angle to the direction of the main corrugation.

The panel can have apertures permitting a free passage of the ball there through.

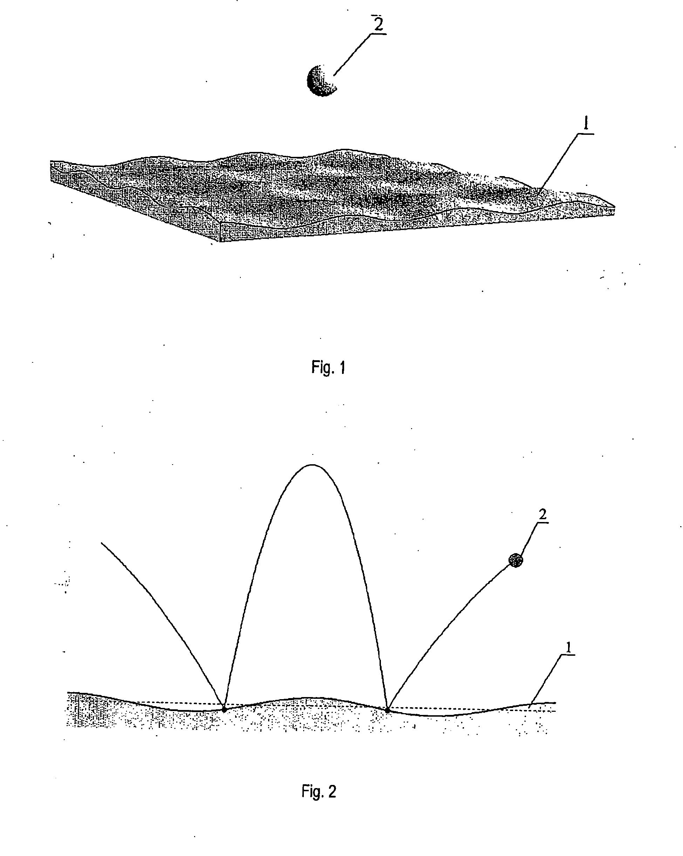

The invention is explained in Figure 1, which schematically shows one of the options of the proposed apparatus, and in Figure 2, which shows an example of the ball trajectory.

The apparatus comprises a horizontal panel 1 whose working surface is corrugated, and a ball 2, which is part of the claimed apparatus. In the present embodiment, panel 1 is corrugated sinusoidally in two directions, i.e. the panel comprises the main corrugation and the secondary corrugation oriented at an angle to the direction of the main corrugation. In the general case, the corrugations of panel 1 can have any profile - sinusoidal, trapezoidal, triangular (sawtooth) or have some other more complex shapes. The main requirement for the corrugation geometry is the presence of areas oriented at an angle to the horizontal plane (the plane of the panel). When using the apparatus as a teaching aid, the panel surface may contain some areas with different parameters of the corrugation, which differ by their geometric dimensions and the shape of the profile. This enhances the demonstration and training potential of the apparatus performance.

Panel 1 can be made in the shape of alternating lanes having different geometric parameters of corrugation. The distance between the lanes should not be shorter than the period of corrugation. In a particular case, some lanes may have no corrugation. For most applications, the number of corrugation periods does not exceed 100.

Regardless of the shape of the corrugation, the above-mentioned technical result is achieved provided that the amplitude of the corrugation and the diameter of ball 2 is at least 10 times smaller than the corrugation period.

Below, the diameters of ball 2 and the parameters of corrugated panel 1 are shown for the case of a sinusoidal corrugation profile.

| Ball diameter, cm | Corrugation period , cm | Corrugation amplitude, cm |
|---|---|---|
| 4 | 200 | 3 |
| 2 | 100 | 1 |
| 2 | 30 | 1 |

The apparatus may include a device (not shown) for throwing ball 2 onto panel 1. It is advisable to design such a device such that ball 2 could be thrown at different initial velocities and angles. It is also advisable to provide this device with a scale permitting the values of the initial velocity and angle to be registered. Such device is necessary when using the apparatus as an aid in teaching mechanics to demonstrate the dynamics of an elastic body subjected to external forces. In the simplest version of this design, a ballistic gun may be used, which is a standard piece of laboratory equipment in physics classrooms. To vary the initial parameters of the trajectory of ball 2 in a wider range, the design can be improved by using a laboratory stand to secure the ballistic gun at a given distance from panel 1.

When using the apparatus for entertainment purposes, the device for throwing ball 2 onto panel 1 is not required. The use of the physical force of the player's hands for throwing ball 2 onto panel 1 contributes to the development of dexterity and a good eye.

When using the apparatus for entertainment, panel 1 may also be equipped with a plurality of apertures (not shown) sized to allow *ball* 2 to pass therethrough. When ball 2 hits or misses the aperture, the player may score respective points, which may constitute the game strategy.

In a different game strategy, the panel may be made without apertures

Panel 1 and ball 2 should be made of materials with elasticity coefficients permitting no less than three rebounds of ball 2 from panel 1 when ball 2 is dropped on panel 2 with no initial velocity. This is realized when the parts of the apparatus are made of such materials as metal, wood, plastic, or hard rubber.

The invention is based on the analytical analysis of motion of ball 2 and collisions thereof with the corrugated surface of panel 2 (provided air resistance is small) and the subsequent numerical simulation.

The nature of the motion of ball 2 is completely determined by four parameters: the amount of energy, the radius of the ball, the period and amplitude of the corrugation. With certain ratios of these parameters, ball 2 may bounce to an integer number of corrugation periods, both from one corrugation minimum to other minima and from one corrugation maximum to other maxima. The increase in each of the four parameters (energy, ball radius, corrugation period or amplitude), with all other conditions being equal, increases the *relative number* of chaotic trajectories, thus reducing predictability of the system dynamics.

Accounting for energy losses in the system due to the weak friction between the air and ball 2 and in collisions thereof with panel 1 shows that with the small relative magnitude of these losses, the nature of motion remains qualitatively unchanged over some time period.

The analysis of the motion of ball 2 for the case when the corrugation of panel 1 is made in two directions (Fig. 1) shows that due to changes in the direction of the rebound of ball 2 from panel 1, which occurs at each collision, this motion acquires a characteristic feature of being similar to random "wanderings".

The analysis of the cases described above, and numerical simulations indicate the need for the following condition to be satisfied: the corrugation amplitude and the diameter of ball 2 must be at least 10 times less than the corrugation period.

Cognitive, educational or entertainment properties of the apparatus are realized by throwing ball 2 onto panel 1.

Ball 2 moves into the gravitational field and undergoes multiple collisions with panel 1. Due to the corrugation of the surface of panel 1 and rotation of ball 2 about its axis, the angle of its rebound from panel 1 differs from the angle of incidence, therefore, parameters of the trajectory of ball 2 change after each collision. Provided that air resistance is small, the trajectory of ball 2 is close to parabolic.

This description does not limit other possible ways of making the panel and devices for throwing the ball.

## Claims

1. An apparatus for training and games comprising a panel and a ball, wherein the panel is in the shape of a periodic corrugation with an amplitude which is at least 10 times less than its period, and the ball has a diameter which is at least 10 times smaller than the period of corrugation.

2. The apparatus of claim 1 wherein the surface corrugation can be made sinuisoidal, trapezoidal, triangular, or can have a more complex form.

3. The apparatus of claim 1 comprising a device capable of throwing the ball at different angles to the plane of the panel.

4. The apparatus of claim 1 comprising a device capable of throwing the ball at different initial velocities.

5. The apparatus of claim 1 comprising a device capable of throwing the ball at different angles to the plane of the panel and at different initial velocities.

6. The apparatus of claim 1 wherein the panel is made with an additional corrugation oriented at an angle to the direction of the main corrugation.

7. The apparatus of claim 1 wherein the panel has a plurality of apertures sized to allow a single *ball* to freely pass therethrough.
